# EUROPÄISCHE PATENTSCHRIFT

(11) **EP 4 072 830 B1**
(45) Veröffentlichungstag und Bekanntmachung des Hinweises auf die Patenterteilung: **13.08.2025**
(21) Anmeldenummer: 20808479.8
(22) Anmeldetag: 25.11.2020
(51) Int. Cl.: B29C 65/08, B65D 75/58, B29K 23/00, B29L 9/00, B29K 705/02, B29K 711/12

(54) **VERFAHREN ZUM VERBINDEN VON WERKSTÜCKEN UND ZUSAMMENGESETZTER GEGENSTAND**
METHOD FOR JOINING WORKPIECES AND ASSEMBLED ARTICLE
PROCÉDÉ DE RACCORDEMENT DE PIÈCES ET OBJET ASSEMBLÉ

(30) Priorität: 11.12.2019 EP 19215157
(43) Veröffentlichungstag der Anmeldung: 19.10.2022
(60) Teilanmeldung: 25188044.9
(73) Patentinhaber: Telsonic Holding AG, 9552 Bronschhofen (CH)
(72) Erfinder: MÜLLER, Ralf, 9063 Stein (CH)
(74) Vertreter: Hepp Wenger Ryffel AG
(86) Internationale Anmeldenummer: PCT/EP2020/083369
(87) Internationale Veröffentlichungsnummer: WO 2021/115788

(56) Entgegenhaltungen:
- WO-A1-2011/003891
- WO-A1-2018/171896
- DE-A1- 102010 003 268
- JP-A- 2000 079 638
- JP-A- H1 125 644
- US-A- 5 152 438
- US-A- 5 244 520
- LAND W ET AL: "Erfahrungen beim Schweißen von Formteilen aus Thermoplasten", KUNSTSTOFFE,, vol. 75, no. 6, 1 June 1985 (1985-06-01), pages 315 - 320, XP001353665

## Beschreibung

Die Erfindung betrifft ein Verfahren zum Verbinden von Werkstücken und einen zusammengesetzten Gegenstand mit den Merkmalen des Oberbegriffs der unabhängigen Patentansprüche.

In vielen Anwendungsgebieten müssen Werkstücke miteinander verbunden werden. Denkbar ist beispielsweise das Verbinden von Kunststoffteilen, beispielsweise im Bereich von Verpackungen, im Automobilbau oder bei der Herstellung von medizinischen Geräten. Ebenso müssen teilweise metallische Werkstücke miteinander verbunden werden, beispielsweise Kontaktteile mit elektrischen Leitern.

Es ist bekannt, zum Verbinden von solchen Werkstücken Ultraschallschwingungen in die Werkstücke einzuleiten. Durch die eingeleiteten Ultraschallschwingungen entstehen Ultraschallschweissungen, welche die Werkstücke miteinander verbinden.

Insbesondere bei unterschiedlichen Materialpaarungen ist es allerdings nicht ohne weiteres möglich, zufriedenstellende Ultraschallschweissungen zu erzeugen. Insbesondere bei Werkstücken aus Kunststoffmaterialien, welche unterschiedliche Schmelzpunkte aufweisen, kann sich die Schweissung schwierig gestalten. Eine Möglichkeit, auch bei unterschiedlichen Paarungen von Materialien Schweissresultate mit zufriedenstellenden Eigenschaften zu erzielen besteht darin, die Anpresskraft, die Schweissdauer und/oder die eingebrachte Energie zu erhöhen. Dies kann allerdings bei sensiblen Werkstücken zu Zerstörungen führen.

Ein typisches Anwendungsgebiet beim Verschweissen von Werkstücken aus Kunststoff ist das Befestigen von Ausgussteilen an Verpackungen, beispielsweise Getränkeverpackungen. Der Ausguss soll dabei aus einem Material bestehen, das möglichst sauerstoffdicht ist, beispielsweise HDPE. Die Verpackung an sich besteht aus einem Körper, der aus einer Folie gebildet ist, typischerweise einer Laminatfolie. Die Laminatfolie weist auf ihrer Aussenseite eine Kunststoffschicht, typischerweise aus LDPE auf. Eine Kartonschicht stellt die gewünschte Festigkeit bereit. Eine Aluminiumschicht sorgt für Sauerstoff-Dichtheit. Es hat sich nun aber gezeigt, dass beim Aufbringen von grossen Kräften bei der Verschweissung die Aluminiumschicht zerstört werden kann. Dies kann zu Qualitätsproblemen beim verpackten Inhalt führen, typischerweise einem Getränk. Das Aufreissen der Aluminiumschicht kann zur Bildung von Taschen und damit auch zu hygienischen Problemen führen.

Das Dokument JP H11 25644 A offenbart eine Spulenschweissvorrichtung für eine Magnetbandkassette, die in eine obere Spule eingreift, deren relative Drehung unmöglich ist, und die in eine Aufnahmebasis zum Schweissen eingreift, die die obere Spule und eine untere Spule trägt, deren relative Drehung unmöglich ist. Weiterhin enthält die Vorrichtung ein Schweisshorn, das Ultraschallenergie entlang der Umfangsrichtung der Spulen auf die untere Spule überträgt, eine Bewegungseinrichtung, die die Spulen, so hält, dass sie in einer Spulendickenrichtung gehalten werden, während sie das Schweisshorn in die Nähe der Aufnahmebasis zum Schweissen bringt, und eine Saugeinrichtung, die in der Lage ist, Luft aus einem Bandgehäusebereich anzusaugen, der zwischen der oberen Spule und der unteren Spule gehalten wird, und die obere und untere Spule, verschweisst.

Das Dokument WO 2011/003891 A1 offenbart ein Verfahren zum Verschweissen eines Anbauteils mit einem Bauteil, insbesondere für ein Kraftfahrzeug, mit dem an sich bekannten torsionalen Ultraschallschweissverfahren mit einer Sonotrode zur Übertragung der den Schweissvorgang erzeugenden Schwingungen auf das zu verschweissende Anbauteil, wobei das Anbauteil mit einer Ankopplungsfläche zur Ankopplung der Schwingungen der Sonotrode versehen wird und das Anbauteil auf dem zur Schweissfläche auf dem Bauteil gewandten Schweissbereich mit Kopplungselementen zur Ankopplung der von der Sonotrode induzierten Schwingungen versehen wird und dadurch beim Schweissvorgang die Kopplungselemente schmelzen und so das Anbauteil mit dem Bauteil verschweissen. Damit die Menge und Verweildauer der Schmelze während des Schweissvorgangs an der Schweissfläche erhöht wird und dadurch lokal die benötigte Schmelztemperatur und Einwirkdauer zur Erzeugung der benötigten Verbindungsqualität erreicht wird, wird vorgeschlagen, dass als Kopplungselemente sich im Wesentlichen senkrecht zum Schweissbereich erstreckende Auskragungen verwendet werden, die so angeordnet werden, dass die Schmelze im Wesentlichen auf der Schweissfläche bleibt.

Das Dokument DE 10 2010 003268 A1 offenbart ein Verfahren zum Verbinden eines Ausgusses für eine Verpackung mit einem Packstoff mittels Ultraschalls sowie einen zusammengesetzten Gegenstand in Form einer Verpackung, wobei ein Ausguss und ein Packmaterial mittels Ultraschallschweissung miteinander verbunden sind.

Es ist daher die Aufgabe der Erfindung, die Nachteile des Bekannten zu vermeiden, insbesondere also ein Verfahren zum Verbinden von Werkstücken zu schaffen, mit welchem auch Werkstücke aus unterschiedlichem Material mit einer guten Schweissqualität miteinander verbunden werden können. Eine weitere Aufgabe der Erfindung besteht darin, einen zusammengesetzten Gegenstand zu schaffen, bei dem zwei Werkstücke insbesondere auch aus unterschiedlichen Materialien mit einer guten Schweissqualität miteinander verbunden sind.

Diese Aufgaben werden erfindungsgemäss mit einem Verfahren und einem Gegenstand mit den Merkmalen des kennzeichnenden Teils der unabhängigen Patentansprüche gelöst. Bevorzugte Ausführungsformen ergeben sich aus den abhängigen Ansprüchen.

Das erfindungsgemässe Verfahren dient zum Verbinden von Werkstücken mittels Ultraschalls. Typischerweise werden zwei Werkstücke miteinander verbunden. Es ist aber auch denkbar, mehr als zwei Werkstücke miteinander zu verbinden.

In einem ersten Schritt wird ein erstes Werkzeug bereitgestellt, das wenigstens einen Energierichtungsgeber aufweist. Es ist an sich bekannt, beim Ultraschallschweissen Werkstücke mit Energierichtungsgebern zu versehen. Ultraschallschwingungen werden im Bereich des Energierichtungsgebers in das Werkstück eingeleitet.

Das erste Werkstück ist typischerweise ein Ausguss für eine Verpackung. Es sind aber auch andere Werkstücke denkbar, beispielsweise Dicht- oder Filtermembranen auf Spritzgussteilen, z.B. in der Medizintechnik. Denkbar wären aber auch Sensorhalter zur Aufnahme von Sensoren in Automobilstossstangen.

Ausserdem wird ein zweites Werkstück bereitgestellt. Dabei kann es sich insbesondere um einen Packstoff zum Herstellen einer Verpackung dienen. Es ist aber auch denkbar, dass das zweite Werkstück eine Stossstange ist, auf der ein wie vorstehend beschriebener Sensorhalter aufgebracht werden soll.

Das erste und das zweite Werkstück werden derart miteinander in Kontakt gebracht, dass der Energierichtungsgeber in Kontakt mit einer ersten Oberfläche des zweiten Werkstücks gelangt.

Danach werden über eine Arbeitsfläche einer Sonotrode eingeleitet Ultraschallschwingungen in eines der Werkstücke. Sonotroden sind mit Ultraschallschwingungen beaufschlagte Werkzeuge und dem Fachmann in vielen Ausgestaltungen bekannt.

Die Ultraschallschwingungen verlaufen parallel zu der Oberfläche des Werkstücks, welche in Kontakt mit der Arbeitsfläche der Sonotrode gelangt. Auf diese Weise wird Wärme basierend auf zwei unterschiedlichen Mechanismen erzeugt. Einerseits führen durch die Sonotrode in die Werkstücke eingeleitete Bewegungen zu einer Erwärmung im Innern des oder der Werkstücke. Zum anderen führen Reibungen oder Bewegungen im Bereich der Grenzfläche den Werkstücken zusätzlich zu einer Wärmeerzeugung.

Insbesondere beim Verschweissen von Kunststoff-Fügeparametern ist es üblich, Ultraschallschwingungen in einer Schwingungsrichtung senkrecht zu Kontaktflächen der Werkstücke mit einer Sonotrode einzuleiten. Es hat sich gezeigt, dass solche Schwingungen bei bestimmten Arten von Fügepartnern zu Beschädigungen führen können oder dass - bei reduzierter Schwingungsamplitude zum Vermeiden von Beschädigungen keine ausreichende Schweissverbindung erzeugt werden kann. Dies ist insbesondere der Fall bei folienartigen Fügeparametern wie beispielsweise Monofolien, Folien aus Biopolymeren oder auch mehrlagigen Verbundfolien wie sie beispielsweise im Bereich von Verpackungen eingesetzt werden.

Ein weiterer Aspekt der Erfindung betrifft daher die Verwendung von torsionalen Ultraschallschwingungen zum Verbinden von Fügepartnern, wobei wenigstens einer der Fügepartner im Bereich einer Kontaktfläche mit dem anderen Fügepartner eine Monofolie, eine Folie aus einem Biopolymer (beispielsweise Polylactat) oder eine Mehrschichtfolie aufweist.

Während solche Anwendungen besonders bevorzugt in Zusammenhang mit den nachstehend beschriebenen weiteren Aspekten der Erfindung erfolgen, versteht es sich, dass auch mit anderen Anordnungen von Sonotroden und/oder Energierichtungsgebern vorteilhafte Ergebnisse erzielbar sind. Insbesondere erlaubt es die Verwendung von torsionalen Schwingungen, die Schwingamplitude im Bereich der Kontaktfläche zwischen Sonotrode und Fügeparameter so weit zu erhöhen, bis eine ausreichende Schweissverbindung erzeugt wird. Bei torsionalen Schwingungen lässt sich die Amplitude erhöhen, indem der Radius der Schweissfläche bezogen auf eine Achse erhöht wird. Eine ähnliche Erhöhung einer Amplitude ist bei klassischen longitudinalen Schwingungen senkrecht zum Werkstück nicht ohne weiteres möglich. Weil die Schwingungsrichtung parallel zur Kontaktfläche verläuft, führt eine erhöhte Amplitude anders als bei herkömmlichen Schwingungen senkrecht zur Kontaktfläche nicht zu einer Beeinträchtigung der Werkstücke/Fügeparameter.

Insbesondere bei der Verbindung von Folien mit einer Dicke von weniger als 100 µm, insbesondere von ca. 50 µm ist die Verwendung von torsionalen Ultraschallschwingungen zur Verschweissung besonders vorteilhaft.

Erfindungsgemäss wird eine Sonotrode verwendet, welche auf ihrer Arbeitsfläche eine Kontur mit Kontaktlinien aufweist. Die Sonotrode wird dabei bezüglich des ersten Werkstücks so positioniert, dass die Kontaktlinien quer zum Energierichtungsgeber verlaufen. Quer bedeutet typischerweise unter einem Winkel von +/- 45°, bevorzugt etwa 85°-95°, besonders bevorzugt etwa 90°. Auf diese Weise wird Schall nur in Kreuzungspunkten zwischen den Kontaktlinien und dem Energierichtungsgeber in die Werkstücke, insbesondere in das zweite Werkstück eingeleitet. Dadurch ist die Belastung insbesondere des zweiten Werkstücks geringer. Zerstörungen durch die aufgebrachte Kraft werden vermieden, weil aufgrund der Beschränkung der Krafteinleitung auf die Kreuzungspunkte die insgesamt wirkende Kraft geringer ist.

Bevorzugt wird die Arbeitsfläche der Sonotrode in Kontakt mit einer zweiten Oberfläche des zweiten Werkstücks gebracht, welche der ersten Oberfläche gegenüberliegt, das heisst der Oberfläche, welche mit dem Energierichtungsgeber in Kontakt gelangt. Typischerweise wird also das zweite Werkstück, beispielsweise eine Folie eines Packstoffs, in Kontakt mit der Arbeitsfläche der Sonotrode gebracht.

Gemäss einem bevorzugten Ausführungsbeispiel wird eine Sonotrode verwendet, bei der die Arbeitsfläche kreisförmig ist. In Abhängigkeit der Form des Werkstücks sind aber auch andere Formen der Arbeitsfläche der Sonotrode denkbar. Dabei sind die Kontaktlinien sternförmig auf der Arbeitsfläche bezogen auf ein Zentrum angeordnet. Die Arbeitsfläche muss keinen vollständigen Kreis umfassen, sondern kann auch kreisringförmig sein.

Je nach zu verbindenden Werkstücken ist es aber auch denkbar, dass Sonotroden Arbeitsflächen aufweisen, die auf einem Rechteck oder einem Quadrat liegen. Dabei verlaufen die Kontaktlinien in der Regel quer zu einer Schwingungsrichtung der Sonotrode, sodass sich ein Mitnahmeeffekt aufgrund der Schwingungen gibt. Der Winkel der Kontaktlinien bezogen auf die Kontur der Werkstücke und insbesondere des Energierichtungsgebers kann daher vorallem bei torsionalen Schwingungen auch nicht konstant sein. Insbesondere bei torsionalen Schwingungen bietet es sich daher an, dass die Kontaktlinien sternförmig sind. Bei longitudinalen Schwingungseinleitungen sind auch zueinander parallel liegende Kontaktlinien denkbar, die dann jeweils quer zu einer Schwingungsrichtung verlaufen.

Bevorzugt wird eine Sonotrode verwendet, bei der die Kontaktlinien auf einer Rippe zwischen zwei benachbarten Vertiefungen ausgebildet sind. Typischerweise kann die Arbeitsfläche der Sonotrode mit einer Hirth Verzahnung versehen sein, welche die Kontaktlinien auf den Rippen bildet.

Bevorzugt ist der Querschnitt der Rippe in einer Ebene senkrecht zur radialen Richtung in einem Schweissbereich in radialer Richtung gesehen konstant. Damit wird sichergestellt, dass die auf das entsprechende Werkstück wirkende Arbeitsfläche mit den Kontaktrillen gleich bleibt, auch wenn das Werkstück bezogen auf die Arbeitsfläche der Sonotrode nicht genau präzise positioniert ist. Insbesondere bei kreisförmigen Werkstücken und kreisförmigen Arbeitsflächen der Sonotrode ist es denkbar, dass keine perfekte Ausrichtung, das heisst Übereinstimmung von Achsen des Werkstücks und der Sonotrode, vorliegt. Bei einer nicht perfekten Ausrichtung wird mit einem in radialer Richtung im Schweissbereich konstant bleibenden Querschnitt der Rippe sichergestellt, dass die Form der Kontaktlinien im Kontaktpunkt mit dem Werkstück im Bereich des Energierichtungsgebers immer gleich ist.

Typischerweise ist die Rippe im Querschnitt in einer Ebene senkrecht zur radialen Richtung V-förmig ausgebildet. Der Winkel zwischen zwei Schenkeln des V-förmigen Querschnitts beträgt typischerweise 40° bis 70°, insbesondere 60°. Die Höhe der Rippe, das heisst ein Abstand zwischen den Kontaktlinien und einem Grund der Vertiefungen, kann typischerweise 0,1 mm bis 1,5 mm, bevorzugt 0,4 mm bis 1 mm betragen. Besonders bevorzugt beträgt der Abstand etwa 0,6 mm.

Die Kontaktlinien haben einen Abstand zueinander von etwa 0,1 mm bis 2,5 mm, bevorzugt 0,8 mm bis 2 mm. Bevorzugt sind sie etwa 1 mm voneinander beabstandet. Es versteht sich von selbst, dass in Abhängigkeit der Grösse der zu verschweissenden Werkstücke sich diese Dimensionen ändern können.

Bevorzugt ist der Energierichtungsgeber als umlaufende Erhöhung ausgebildet. Typischerweise ist der Energierichtungsgeber auf einen Kreis oder wenigstens teilweise auf einen Kreis angeordnet. Dies ist besonders bevorzugt, wenn das erste Werkstück ebenfalls kreisförmig ausgebildet ist, beispielsweise als Ausguss geformt ist.

Gemäss einer besonders bevorzugten Ausführungsform wird ein Energierichtungsgeber verwendet, der im Querschnitt betrachtet eine relativ breite Kontaktfläche zum Kontaktieren des anderen Werkstücks aufweist. Aus dem Stand der Technik bekannte Energierichtungsgeber werden häufig mit einem Querschnitt mit etwa dreieckförmiger Form versehen. Es hat sich gezeigt, dass sich durch Verwendung eines im Querschnitt trapezförmigen Energierichtungsgebers mit einer relativ breiten Kontaktfläche insbesondere bei zweiten Werkstücken in Form von Laminaten, Folien, Membranen Beschädigungen des zweiten Werkstücks vermeiden lassen. Dies ist insbesondere bei Verpackungsanwendungen relevant. Gemäss einem weiteren Aspekt ist daher der Energierichtungsgeber im Querschnitt bevorzugt trapezförmig und insbesondere mit einer Kontaktfläche versehen, die eine Breite aufweist, die mindestens fünfmal so gross, bevorzugt mindestens siebenmal so gross ist wie die Höhe des Energierichtungsgebers.

Bei traditionellen Schweissverfahren mit Schwingrichtungen senkrecht zur Kontaktfläche eines Fügeparameters wird ein Energierichtungsgeber mit einem dreieckförmigen Querschnitt und einem möglichst scharfen Kontaktbereich verwendet. Beim torsionalen Schweissen wird oft flächig geschweisst, sodass auf einen Energierichtungsgeber vollständig verzichtet werden kann. Durch die Verwendung eines erfindungsgemässen Energierichtungsgebers mit einer breiten Kontaktfläche lässt sich die Schweissverbindung im torsionalen Schweissen optimieren, ohne dass das Risiko des Eindringens des Energierichtungsgebers in den anderen Fügepartner besteht.

Bei traditionellen longitudinalen Schweissverfahren ist es nicht möglich, ausreichend hohe Energie in die Folie einzutragen, ohne diese zu zerstören. Es ist daher bislang ausgegangen worden, dass sich Monofolien mit Ultraschall nicht zuverlässig schweissen lassen. Mit Ultraschallschwingungen parallel zu Schalleinleitungsflächen, insbesondere torsionalen Ultraschallschwingungen, können aber auch Monofolien verschweisst werden. Druckspitzen, welche aufgrund von scharfen Energierichtungsgebern bei longitudinalen Schweissverfahren auftreten und zur Zerstörung der Monofolie führen, sind bei torsionalen oder anderen linearen Schweissverfahren nicht erforderlich. Es können aber trotzdem Energierichtungsgeber eingesetzt werden, wenn diese eine ausreichend grosse Kontaktfläche aufweisen. Ähnliche Vorteile ergeben sich bei Materialien aus Biopolymer. Bei Erwärmung besteht ansonsten auch dort das Problem, dass das Material zerstört wird.

Die Kontaktlinien werden bevorzugt unter einem Winkel von 90° bezogen auf den Energierichtungsgeber angeordnet. Dadurch ergeben sich besonders genau definierte Schalleinleitungspunkte.

Die Ultraschallschwingungen können als torsionale Schwingungen, als longitudinale Schwingungen oder als Kombinationen von torsionalen und longitudinalen Schwingungen eingeleitet werden. Die Erzeugung von solchen Schwingungen ist dem Fachmann bekannt. Besonders bevorzugt wird eine Kombination von torsionalen und longitudinalen Schwingungen verwendet, die mit einer Sonotrode erzeugt werden, wie sie in der hängigen Anmeldung EP 19209532.1 der gleichen Anmelderin beschrieben ist. Der Inhalt dieser Anmeldung wird durch Querverweis in die vorliegende Anmeldung aufgenommen.

Besonders bevorzugt werden Werkstücke bereitgestellt, die aus unterschiedlichem Material bestehen oder unterschiedliche Materialien aufweisen. Insbesondere besteht das erste Werkstück zumindest im Bereich des Energierichtungsgebers aus HDPE. Das zweite Werkstück weist zumindest auf seiner ersten Oberfläche LDPE auf.

Es hat sich gezeigt, dass es besonders vorteilhaft ist, wenn das erste Werkstück mit seiner dem Energierichtungsgeber abgewandten Seite auf eine Aufnahme aufgelegt wird, welche eine Aufnahmefläche aufweist, die ebenfalls mit Kontaktlinien versehen ist. Solche Aufnahmen werden oft auch als Amboss bezeichnet. Mit einem Amboss mit Kontaktflächen wird zusätzlich sichergestellt, dass möglichst wenig Reibung zwischen Amboss und Werkstück erzeugt wird, sodass die aufgrund von Reibung erzeugte Wärme insbesondere im Bereich der Grenzflächen zwischen erstem und zweitem Werkstück generiert wird. Besonders bevorzugt ist die Kontur der Auflagefläche gleich ausgebildet, wie die vorstehend im Zusammenhang mit der Sonotrode beschriebene Kontur. Es sind aber auch andere Dimensionen oder Formen von Rippen denkbar.

Es hat sich gezeigt, dass aufgrund der optimierten Energieeinleitung relativ kurze Schweisszeiten möglich sind. Typischerweise ist ein Schweissvorgang während einer Schweissdauer von 50 bis 60 Millisekunden ausreichend, um beispielsweise einen Ausguss aus Kunststoffmaterial auf ein flächiges Packmaterial zu schweissen. Eine längere Schweissung könnte zu einer Beschädigung des Packstoffs führen, selbst wenn die erfindungsgemässe Anordnung mit relativ breiten Energierichtungsgebern und gezielt angeordneten Kontaktlinien eingesetzt wird. Daher wird bevorzugt ein Generator zur Erzeugung von Ultraschallschwingungen eingesetzt, der eine sehr präzise Kontrolle der Schweisszeiten erlaubt. Insbesondere sollten Schweisszeiten auf mindestens 5 Millisekunden genau einstellbar sein. Bei Verwendung von torsionalen oder longitudinalen Schwingungen parallel zur Grenzfläche zwischen erstem und zweitem Werkstück wird trotzdem ausreichend Energie in die Werkstücke eingebracht, sodass auch bei einer kurzen Schweisszeit eine zuverlässige Verbindung möglich ist.

Gemäss einem weiteren Aspekt der hervorliegenden Erfindung wird ein Verfahren bereitgestellt, bei dem ebenfalls ein erstes und ein zweites Werkstück in der vorstehend beschriebenen Art und Weise bereitgestellt und in Kontakt gebracht werden und bei welchem Ultraschallschwingungen in eines der Werkstücke über eine Arbeitsfläche der Sonotrode eingeleitet werden. Gemäss diesem Aspekt der Erfindung werden Ultraschallschwingungen im Bereich des Energierichtungsgebers in wenigstens einem Schalleinleitungspunkt in das erste oder in das zweite Werkstück eingeleitet. Ausgehend vom Schalleinleitungspunkt erfolgt ein Aufschmelzen des Materials wenigstens eines der Werkstücke bis in eine Schweisszone, die vom Schalleinleitungspunkt beabstandet ist. Durch das gezielte Einleiten von Schwingungen in Schalleinleitungspunkten, die von der eigentlichen Schweisszone entfernt sind, kann eine zufriedenstellende Schweissung erzeugt werden, selbst wenn aufgrund des Kontakts zwischen Werkstück und Sonotrode das Werkstück in den Schalleinleitungspunkten beeinträchtigt wird.

Gemäss noch einem weiteren Aspekt der Erfindung wird ein zusammengesetzter Gegenstand vorgeschlagen. Der Gegenstand ist typischerweise aus einem ersten und einem zweiten Werkstück zusammengesetzt. Typischerweise erfolgt die Verbindung mit einem wie vorstehend beschriebenen Verfahren. Insbesondere handelt es sich beim Gegenstand um eine Verpackung. Dabei ist das erste Werkstück beispielsweise ein Ausguss, der typischerweise im Spritzgussverfahren hergestellt wurde. Das zweite Werkstück ist typischerweise eine mehrschichtige Verpackungsfolie. Solche Folien sind an sich bekannt und weisen Schichten aus Aluminium, Karton und Kunststoff auf. Denkbar sind aber auch Monolayerfolien.

Das erste und das zweite Werkstück sind mittels einer Ultraschallschweissung miteinander verbunden. Das erste Werkstück weist auf einer dem zweiten Werkstück zugewandten Seite einen Energierichtungsgeber auf. Es versteht sich allerdings, dass der Energierichtungsgeber im Laufe der Verschweissung ganz oder teilweise verschwinden kann.

Erfindungsgemäss weist der Gegenstand auf dem zweiten Werkstück in einem Bereich entlang des Energierichtungsgebers Schalleinleitungseindrücke auf. Die Schalleinleitungseindrücke sind voneinander beabstandet und durch Schweisszonen voneinander getrennt. Die Schalleinleitungseindrücke verlaufen quer zum Energierichtungsgeber. Durch die Schalleinleitung in einzelnen Punkten kann wie vorstehend beschrieben mit kleineren Amplituden und/oder Schweisszeiten gearbeitet werden. Dadurch wird sichergestellt, dass auch drucksensible Werkstücke ohne Beeinträchtigung zuverlässig, insbesondere fest und dicht verschweisst werden können.

Ein weiterer Aspekt der Erfindung betrifft einen zusammengesetzten Gegenstand, bei dem alternativ oder zusätzlich der Energierichtungsgeber eine optimierte Querschnittsform aufweist. Der zusammengesetzte Gegenstand ist insbesondere auch in dieser Ausführungsform eine Verpackung mit einem ersten und einem zweiten Werkstück. Dabei handelt es sich bevorzugt um einen wie vorstehend beschriebenen Gegenstand.

Das erste und das zweite Werkstück sind mittels Ultraschallschweissung miteinander verbunden. Das erste Werkstück weist auf einer dem zweiten Werkstück zugewandten Seite einen Energierichtungsgeber auf. Im Querschnitt ist der Energierichtungsgeber insbesondere trapezförmig und hat eine Kontaktfläche zur Verbindung mit dem zweiten Werkstück. Die Kontaktfläche ist dabei insbesondere eben ausgebildet. Sie weist eine Breite auf und der Energierichtungsgeber weist eine Höhe senkrecht zur Kontaktfläche auf. Gemäss diesem Aspekt der Erfindung ist die Breite der Kontaktfläche mindestens fünfmal so gross, bevorzugt mindestens siebenmal so gross wie die Höhe des Energierichtungsgebers. Insbesondere ist die Breite der Kontaktfläche etwa zehnmal so gross wie die Höhe des Energierichtungsgebers. Auf diese Weise wird eine ebene und relativ breite Kontaktfläche bereitgestellt. Ein Eindringen des Energierichtungsgebers in einen Packstoff, der durch das Eindringen beschädigt werden könnte, wird dadurch vermieden. Dabei hat es sich gleichzeitig gezeigt, dass ein Energierichtungsgeber mit einem derartigen Querschnitt ausreichend zur Erzeugung einer zuverlässigen Verschweissung ist. Besonders bevorzugt weist der Energierichtungsgeber dabei eine Breite zwischen 0,5 mm und 2 mm, besonders bevorzugt zwischen 0,7 mm und 1,2 mm auf. Die Höhe des Energierichtungsgebers liegt bevorzugt zwischen 0,5 mm und 1,2 mm und beträgt bevorzugt etwa 0,1 mm.

Das erste Werkstück weist typischerweise ein erstes Kunststoffmaterial auf oder besteht daraus. Insbesondere kann das Material HDPE sein. Das zweite Werkstück weist typischerweise auf mindestens der dem ersten Werkstück zugewandten Seite ein zweites Kunststoffmaterial auf, das vom ersten Kunststoffmaterial verschieden ist. Typischerweise handelt es sich um LDPE.

Insbesondere können unterschiedliche Kunststoffmaterialien verwendet werden, die unterschiedliche Schmelzpunkte haben, welche aber nicht allzu weit voneinander entfernt sind. Typischerweise unterscheiden sich die Schmelzpunkte um nicht mehr als ca. 40°.

Insbesondere wenn das zweite Werkstück ein Laminat ist, können sich die Schalleinleitungseindrücke im Wesentlichen durch eine oberste Schicht des Laminats hindurch erstrecken. Bei Packfolien erstrecken sich die Schalleinleitungseindrücke insbesondere durch eine oberste Kunststoffschicht bis auf das Niveau einer Kartonschicht.

Bevorzugt verläuft in allen vorstehend erläuterten Ausführungsbeispielen der Energierichtungsgeber quer zu den Kontaktlinien. Insbesondere im Zusammenhang mit einem wie vorstehend ausgeführt breiten Energierichtungsgeber ist es auch denkbar, dass der Energierichtungsgeber ungefähr parallel zu den Kontaktlinien verläuft. Ausserdem kann ein Winkel zwischen Kontaktlinien und dem Energierichtungsgeber auch entlang des Energierichtungsgebers variieren. Insbesondere ist es beispielsweise denkbar, eine Torsionssonotrode mit kreisförmiger Arbeitsfläche und sternförmig angeordneten Kontaktlinien zu verwenden, um eine nicht kreisförmige Kontur, beispielsweise eine quadratische Kontur zu verschweissen. In diesem Fall kann beispielsweise der Winkel zwischen Energierichtungsgeber und Kontaktlinien zwischen 45° und 90° variieren (45° im Bereich einer Ecke des Quadrates und 90° im Bereich der Mitte einer Seite des Quadrates).

Noch ein weiterer Aspekt der Erfindung betrifft ein alternatives Verfahren zum Verbinden von Werkstücken aus unterschiedlichem Material. Besonders bevorzugt wird dieses Verfahren in Kombination mit einem wie vorstehend beschriebenen Verfahren durchgeführt. Es ist aber auch in anderem Zusammenhang vorteilhaft einsetzbar. Erfindungsgemäss werden Werkstücke aus unterschiedlichem Material miteinander verbunden. Ein erstes Werkstück weist zumindest im Bereich einer dem zweiten Werkstück zugewandten Grenzfläche einen ersten Kristallisationsgrad auf. Ein zweites Werkstück weist zumindest im Bereich einer dem ersten Werkstück zugewandten Grenzfläche einen zweiten Kristallisationsgrad auf. Der zweite Kristallisationsgrad ist vom ersten Kristallisationsgrad verschieden. Die Werkstücke werden an einer Schalleinleitungsfläche mit torsionalen Schwingungen beaufschlagt, wodurch die Werkstücke miteinander verbunden werden. Es hat sich gezeigt, dass bei Fügepartnern aus unterschiedlichen Materialen mit herkömmlichen longitudinalen Schweissverfahren kaum zuverlässige Schweissverbindungen hergestellt werden können, wenn die Werkstücke unterschiedliche Kristallisationsgrade aufweisen. Eine ausreichende Verschweissung lässt sich nur erzeugen, wenn die amorphen und die kristallinen Anteile in den Werkstücken im Rahmen der Verschweissung gleichzeitig erweicht sind. Vorallem Werkstücke mit hohen kristallinen Anteilen benötigen eine hohe Energie und damit auch eine hohe Amplitude, um einen maximalen Energieeintrag in die Schweisszone in ausreichend kurzer Zeit zu erreichen. Gleichzeitig kann bei longitudinaler Schwingungseinleitung eine ausreichend höhe Amplitude nicht eingeleitet werden, um bereits mit niedrigeren Amplituden aufgeweichte Werkstücke mit grösserem amorphem Anteil nicht zu beschädigen. Bei torsionalen Schwingungseinleitungen besteht dieses Problem nicht.

Die Wirkung dieses Aspekts der Erfindung zeigt sich beispielsweise beim Verschweissen von LDPE mit LDPE im Vergleich zum Verschweissen von LDPE mit HDPE. Mit einer Amplitude von 30 µm lässt sich bei der Verschweissung von LDPE mit LDPE ein Verbindungsanteil von 65 % erreichen. Eine Amplitude von 30 µm liesse sich auch mit longitudinaler Schwingung erreichen, ohne Werkstücke zu zerstören. Hingegen erreicht eine Amplitude von 30 µm bei einer Kombination von LDPE mit HDPE nur noch einen Verbindungsanteil von 20 % (das heisst, dass nur in 20 % des Volumens benachbart zur Grenzfläche eine Verbindung zwischen den Fügepartnern entsteht). Dies ist für eine zuverlässige Schweissverbindung nicht ausreichend.

Eine Erhöhung der Amplitude auf 40 µm führt dazu, dass in beiden Werkstücken amorphen und kristalline Anteile aufschmelzen. Dabei gehen die Materialien LDPE und HDPE eine ausrechend starke Verbindung auf molekularem Niveau ein.

Diese Erkenntnis ermöglicht die Verschweissung von unterschiedlichen Materialpaarungen für ganz verschiedene Anwendungen: Denkbar ist das Verschweissen von Sensorhaltern in Stossfängern, das Verschweissen von Sensorgehäusen oder das Einschweissen von Aromaschutzventilen in Verpackungen, z.B. bei Kaffee.

Besonders bevorzugt wird daher eine torsionale Schwingung mit einer Amplitude von mindestens 40 µm im Bereich der Schalleinleitungsfläche eingeleitet.

Der erste Krisallisationsgrad beträgt bevorzugt zwischen 10 % und 60 % und der zweite Krisallisationsgrad zwischen 60 % und 90 %.

Besonders bevorzugt lässt sich aufgrund der vorgenannt beschriebenen Erkenntnisse das erfindungsgemässe Verfahren zum Verbinden von Werkstücken mit LDPE und HDPE im Bereich der Grenzflächen einsetzen. Dabei können die Werkstücke einstückig aus LDPE bzw. HDPE bestehen. Es ist aber auch denkbar, dass sie nur im Bereich der Grenzfläche mit dem entsprechenden Material versehen sind, wie dies beispielsweise bei kunststoffbeschichteten Verpackungsmaterialien (Aluminium- und Kartonsubstrat mit einer LDPE-Schicht) der Fall ist.

Noch ein weiterer Aspekt der Erfindung betrifft einen zusammengesetzten Gegenstand aus mindestens zwei Werkstücken. Ein erstes Werkstück weist zumindest im Bereich einer dem zweiten Werkstück zugewandten Grenzfläche einen ersten Krisallisationsgrad auf. Ein zweites Werkstück weist zumindest im Bereich einer dem ersten Werkstück zugewandten Grenzfläche einen zweiten Kristallisationsgrad auf, der von dem ersten Kristallisationsgrad verschieden ist. Die Werkstücke sind durch eine Schweissverbindung zwischen den Grenzflächen miteinander verbunden, die durch torsionale Ultraschallschwingungen erzeugt ist. Die Erzeugung mittels torsionalen Ultraschallschwingungen lässt sich anhand von auf der Schalleinleitungsfläche angeordneten Schalleinleitungseindrücken erkennen, welche zumindest teilweise eine Rotationssymmetrie aufweisen.

Die Erfindung wird nachfolgend in Ausführungsbeispielen und anhand der Zeichnungen näher erläutert. Es zeigen:
- Figur 1:: eine perspektivische Darstellung einer erfindungsgemässen Sonotrode mit einer Aufnahme für Werkstücke,
- Figur 2:: eine Seitenansicht der Anordnung aus Figur 1 in einer Explosionsdarstellung,
- Figur 3:: eine perspektivische Darstellung einer erfindungsgemässen Sonotrode von der Arbeitsfläche her,
- Figur 4:: eine Seitenansicht einer erfindungsgemässen Sonotrode,
- Figur 5:: einen Querschnitt durch eine erfindungsgemässe Sonotrode entlang einer Längsachse der Sonotrode,
- Figur 6:: eine Ansicht auf die Arbeitsfläche einer Sonotrode,
- Figur 7:: eine vergrösserte Darstellung des Ausschnitts A aus Figur 6,
- Figur 8:: einen vergrösserten Ausschnitt von zwei Werkstücken, welche mit der Arbeitsfläche einer Sonotrode beaufschlagt werden in perspektivischer Darstellung,
- Figur 9:: eine Querschnittdarstellung in einer radialen Ebene durch eine erfindungsgemässe Sonotrode und erfindungsgemässe Werkstücke,
- Figur 10:: eine Seitenansicht auf die Arbeitsfläche einer erfindungsgemässen Sonotrode im vergrösserten Ausschnitt B aus Figur 5,
- Figur 11:: eine perspektivische Darstellung eines Ausschnitts der Arbeitsfläche einer Sonotrode,
- Figur 12:: ein Schnittbild eines mit einem Packstoff verbundenen Ausgusses in einer Ebene senkrecht zu einem Energierichtungsgeber,
- Figur 13:: ein Schnittbild durch einen mit einem Packstoff verbundenen Ausgiesser entlang eines Energierichtungsgebers,
- Figuren 14a und b:: eine Darstellung einer alternativen Ausführungsform eines Energierichtungsgebers mit einer alternativen Form einer Auflage,
- Figuren 15a und b:: eine Darstellung des Energierichtungsgebers aus Figuren 14a und 14b in perspektivischer Form und im Querschnitt,
- Figuren 16a und b:: eine Darstellung einer Aufnahme und einer Aufnahmefläche eines Ambosses in einer ersten Ausführungsform,
- Figuren 17a und b:: eine Darstellung einer Aufnahmefläche eines Ambosses gemäss einer zweiten Ausführungsform und
- Figur 18:: eine grafische Darstellung der Verbindungsanteile bei Werkstücken mit gleichen und mit unterschiedlichen kristallinen Anteilen.

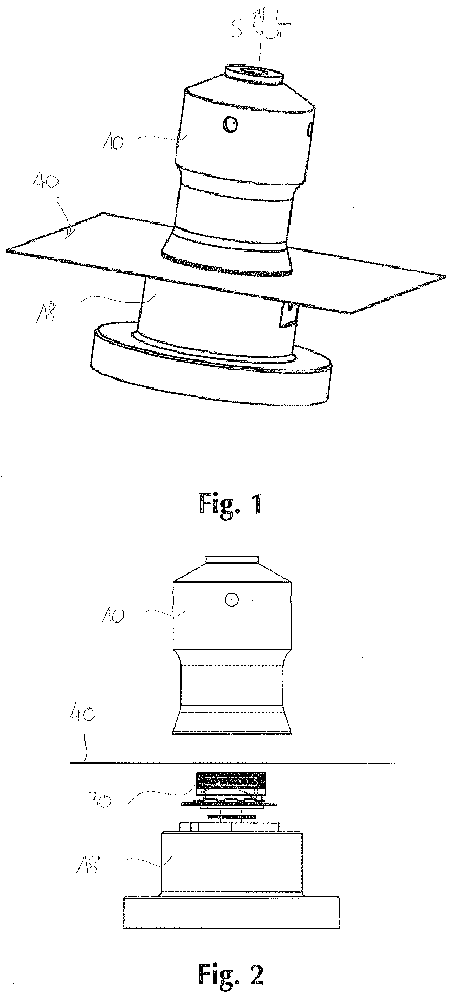

Figur 1 zeigt in perspektivischer Darstellung eine Sonotrode 10 und eine Aufnahme 18. Zwischen der Sonotrode 10 und der Aufnahme 18 sind zwei Werkstücke in Form einer Packstofffolie 40 und eines Ausgiessers (in Figur 1 nicht dargestellt, siehe Figur 2) gezeigt. Die Sonotrode 10 und Aufnahme 18 sind in an sich bekannter Art und Weise zueinander bewegbar, sodass die Werkstücke dazwischen eingeklemmt werden können. Dazu kann die Sonotrode in einem Maschinengestell befestigt sein, welches mit einem Antrieb, typischerweise einem pneumatischen Antrieb oder einem elektromechanischen Antrieb verstellbar ist.

Die Sonotrode 10 wird in an sich bekannter Weise in Ultraschallschwingungen versetzt. Dazu sind ein Ultraschallgenerator und ein Ultraschallkonverter vorgesehen (in Figur 1 nicht gezeigt), welche dem Fachmann an sich bekannt sind. Die Sonotrode 10 wird in torsionale Schwingungen in einer Schwingungsrichtung S um ihre Längsachse L versetzt. Zusätzlich können longitudinale Schwingungen in Längsrichtung L vorhanden sein.

Im Betrieb erfolgt eine Schweissung auf an sich bekannte Art und Weise. Beispielsweise werden Ultraschallschwingungen von 20, 30 oder 35 kHz erzeugt. Die Erzeugung der Schwingungen erfolgt typischerweise über einen an sich bekannten Konverter mit piezoelektrischen Elementen.

Figur 2 zeigt eine Explosionsdarstellung der Anordnung gemäss Figur 1 in einer Seitenansicht. Das erste Werkstück in Form eines Ausgusses 30 und das zweite Werkstück in Form einer Folie aus Packstoff 40 werden zwischen der Sonotrode 10 und der Aufnahme 18 angeordnet.

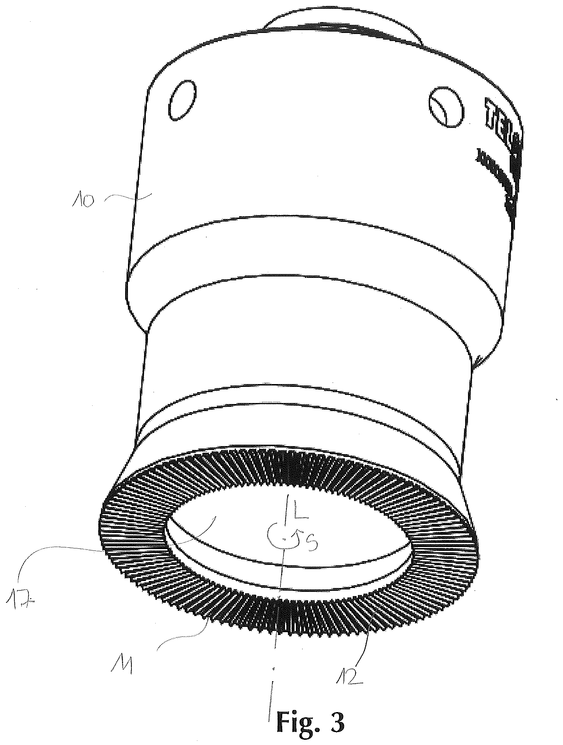

Figur 3 zeigt perspektivisch eine Sonotrode 10 von ihrer Arbeitsfläche 11 her. Die Arbeitsfläche 11 ist kreisringförmig ausgebildet. Innerhalb der kreisringförmigen Arbeitsfläche 11 befindet sich eine Aussparung 17. Die Aussparung 17 bildet eine Freistellung für eine Kontur des Ausgiessers 30. Auf der Arbeitsfläche 11 sind in radialer Richtung bezogen auf die Längsachse L Kontaktlinien 12 angeordnet. Die Kontaktlinien 12 erstrecken sich von einem inneren Rand der Arbeitsfläche 11 bis zu einem äusseren Rand der Arbeitsfläche 11.

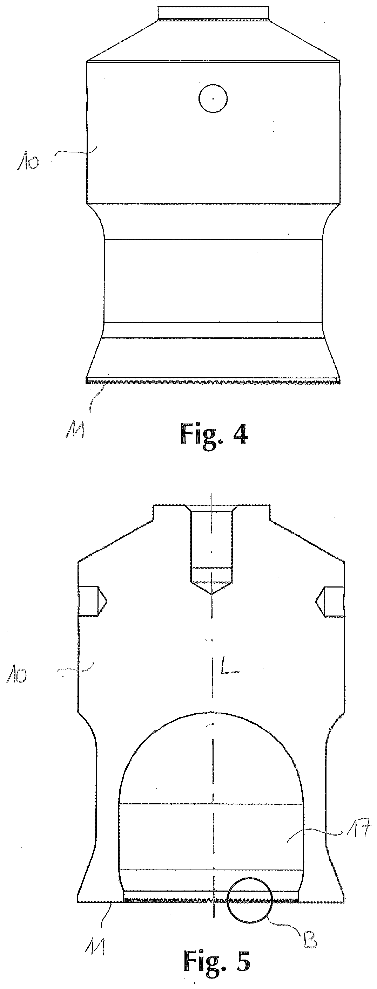

Die Figuren 4 und 5 zeigen die Sonotrode 10 in einer Seitenansicht und in einem Querschnitt entlang der Längsachse L der Sonotrode 10. In der Seitenansicht ist ersichtlich, dass die Arbeitsfläche 11 eine konturierte Oberfläche in Form einer Hirth Verzahnung aufweist. In Figur 5 ist ausserdem die Aussparung 17 für den Ausguss 30 (in Figur 5 nicht dargestellt) zu erkennen.

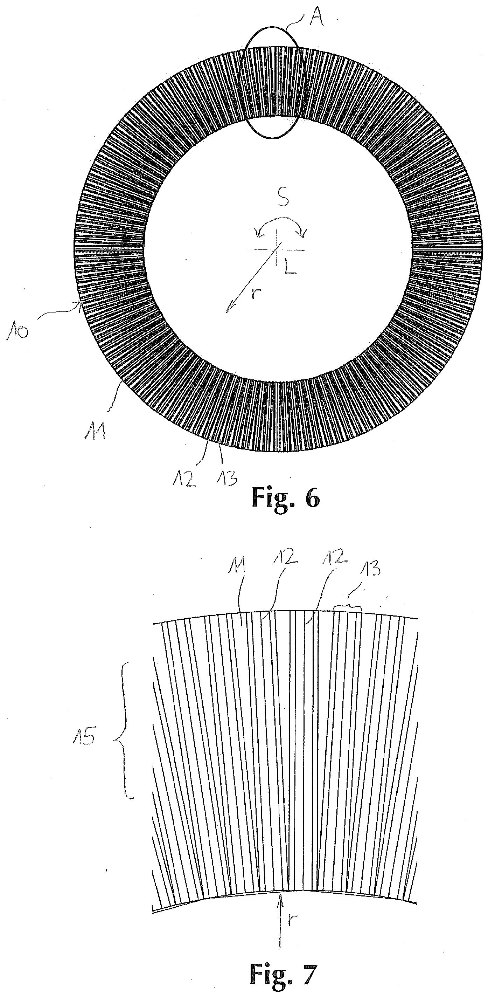

Figur 6 zeigt eine detaillierte Ansicht der Arbeitsfläche 11 der Sonotrode 10. Die Kontaktlinien 12 sind durch Rippen 13 gebildet, welche sich in radialer Richtung r von der Längsachse L der Sonotrode 10 erstrecken.

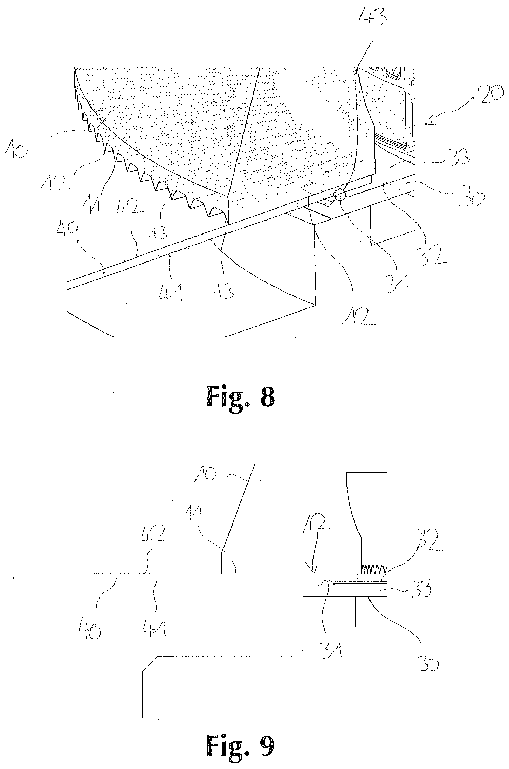

In Figur 7 ist eine vergrösserte Darstellung des Ausschnitts A aus Figur 6 gezeigt. Die Rippen 13 verlaufen in radiale Richtung r und weisen auf ihrer obersten Stelle die Kontaktlinien 12 auf. Der Querschnitt durch die Rippen 13 in einer Ebene senkrecht zur radialen Richtung r ist dabei über einen Schweissbereich 15 konstant. Der Schweissbereich 15 bezeichnet denjenigen Bereich, in dem die Arbeitsfläche 11 der Sonotrode 10 mit dem Packmaterial 40 in einem Bereich benachbart zu einem Energierichtungsgeber 31 am Ausguss 30 (siehe Figuren 8 und 9) in Kontakt gelangen kann.

In Figur 8 ist ein vergrösserter Ausschnitt eines Teils der Sonotrode 10, des Ausgiessers 30 und des Packmaterials 40 gezeigt.

Der Ausgiesser 30 weist einen Flansch 33 auf, mit welchem das Packmaterial 40 verbunden werden soll. Am Flansch 33 ist auf der gegen das Packmaterial 40 hin gerichteten Seite 32 ein Energierichtungsgeber 31 vorgesehen. Der Energierichtungsgeber weist in an sich bekannter Art und Weise einen dreieckigen Querschnitt auf.

Der Energierichtungsgeber weist eine Höhe von typischerweise 0,3 mm auf.

Das Packmaterial 40 weist eine erste Oberfläche 41 auf, welche gegen den Ausgiesser 30 und insbesondere die Seite 32 des Flansches 30 hin gerichtet ist. Eine zweite Oberfläche 42 des Packmaterials 40 ist gegen die Arbeitsfläche 11 der Sonotrode hin gerichtet. Dabei verlaufen die Kontaktlinien 12 der Arbeitsfläche 11 der Sonotrode 10 entlang der zweiten Oberfläche 42.

Die Sonotrode 10 ist so bezogen auf den Ausgiesser 30 positioniert, dass sich die Kontaktlinien 12 in Schalleinleitungspunkten 43 unter einem rechten Winkel mit dem Energierichtungsgeber 31 kreuzen. Der Energierichtungsgeber 31 ist auf dem Flansch 33 kreisförmig umlaufend angeordnet. Die miteinander verschweissten Ausgiesser 30 und Packmaterial 40 bilden gemeinsam eine Verpackung 20, von der in Figur 8 ein Ausschnitt erkennbar ist. Typischerweise ist diese Verpackung eine Lebensmittelverpackung, z. B. Getränkeverpackung. Denkbar sind aber auch Verpackungen für andere Produkte, insbesondere Flüssigkeiten oder Schüttgut.

Figur 9 zeigt eine Darstellung ähnlich wie Figur 8 in einem Querschnitt. Die Sonotrode 10 ist mit ihrer Arbeitsfläche 11 und deren Kontaktlinien 12 in Kontakt mit der zweiten Oberfläche 42 des Packmaterials 40. Das Packmaterial 40 kontaktiert mit der ersten Oberfläche 41 den Ausgiesser 30 im Bereich des Energierichtungsgebers 31.

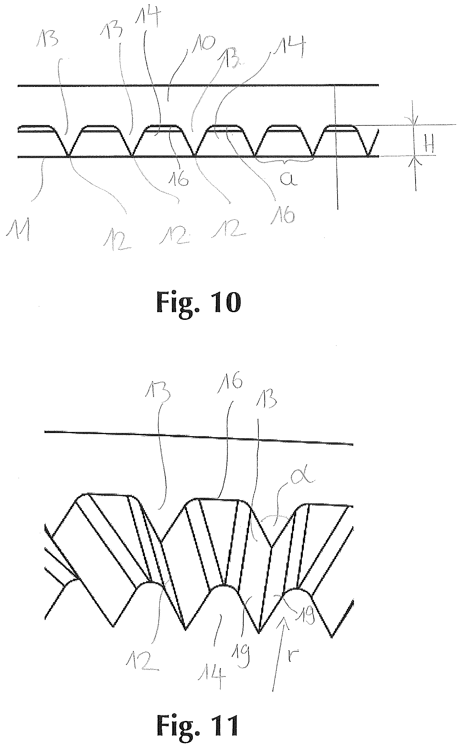

Figur 10 zeigt einen vergrösserten Ausschnitt der Arbeitsfläche 11 der Sonotrode gemäss Ausschnitt B in Figur 5. Die Arbeitsfläche 11 ist mit einer Strukturierung ähnlich einer Hirth Verzahnung versehen. Dadurch sind an der Arbeitsfläche 11 Rippen 13 mit einem V-förmigen Querschnitt vorhanden. Die Spitze der V-förmigen Rippen bildet die Kontaktlinien 12. Zwischen den Rippen ist eine Vertiefung 14 mit einem Grund 16 gebildet. Die Höhe der Vertiefung, das heisst der Abstand H zwischen den Kontaktlinien 12 und dem Grund 16 beträgt 0,6 mm. Der Abstand a zwischen zwei benachbarten Kontaktlinien 12 beträgt im gezeigten Ausführungsbeispiel 1 mm.

Figur 11 zeigt eine perspektivische Darstellung eines Ausschnitts ähnlich wie in Figur 10. In Figur 11 ist erkennbar, dass sich der Querschnitt der Rippen 13 in radialer Richtung r im Wesentlichen nicht ändert. Hingegen ändert sich die Form und insbesondere die Breite der Vertiefungen 14 und deren Grund 16 zwischen den einzelnen Rippen 13. Der Winkel α zwischen zwei Schenkeln 19 der Rippen 13 beträgt 60°.

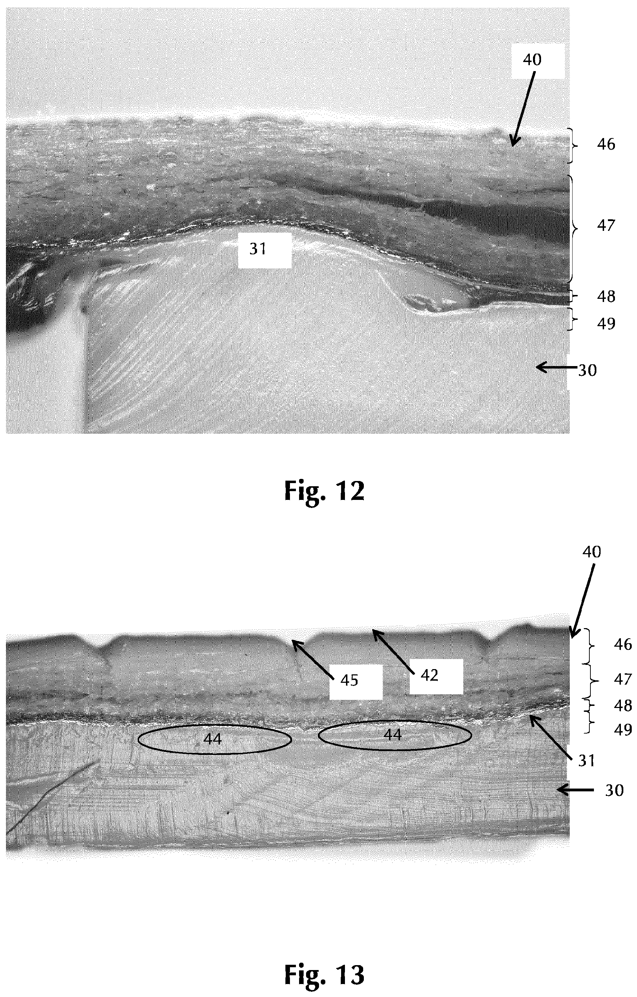

Figur 12 zeigt einen Schnitt durch eine Schicht eines Packmaterials 40, welches auf einen Ausguss 30 geschweisst wurde. Der Schnitt erfolgt in einer Richtung senkrecht zum Energierichtungsgeber 31, das heisst in einer Richtung analog zum Schnitt gemäss Figur 9. Der Energierichtungsgeber 31 ist immer noch erkennbar, allerdings im Vergleich zur ursprünglichen Form (siehe dazu Figuren 8 und 9) etwas abgeflacht. Es liegt eine kontinuierliche und gleichmässige Verschweissung zwischen dem Packstoff 40 und dem Ausgiesser 30 vor.

Der Packstoff 40 weist eine Aluminiumschicht 48 und eine Kartonschicht 47 auf, welche beidseitig von einer LDPE Schicht 46 eingeschlossen sind. Wie Figur 12 zeigt, ist die Aluminiumschicht 48 nicht beschädigt. Die untere LDPE Schicht 49 ist innig mit dem Material des Ausgiessers 30 verbunden, welches im gezeigten Ausführungsbeispiel HDPE ist.

Figur 13 zeigt einen Schnitt durch einen Gegenstand aus einem Ausgiesser 30 und einem Packmaterial 40 entlang des Energierichtungsgebers. Auch hier ist erkennbar, dass die mittlere Aluminiumschicht 48 unbeschädigt ist. Auf der zweiten Oberfläche 42 des Packstoffs 40, welcher der Sonotrode 10 zugewandt war, sind Schalleinleitungseindrücke 45 erkennbar. Die Schalleinleitungseindrücke 45 durchdringen im Wesentlichen die oberste Schicht 46 aus LDPE und erstrecken sich bis fast zur Kartonschicht 47. Die untere LDPE Schicht 49 ist in Schweisszonen 44 innig mit dem Ausgiesser 30 verbunden. Die Schweisszonen 44 erstrecken sich zwischen den Schalleinleitungseindrücken 45.

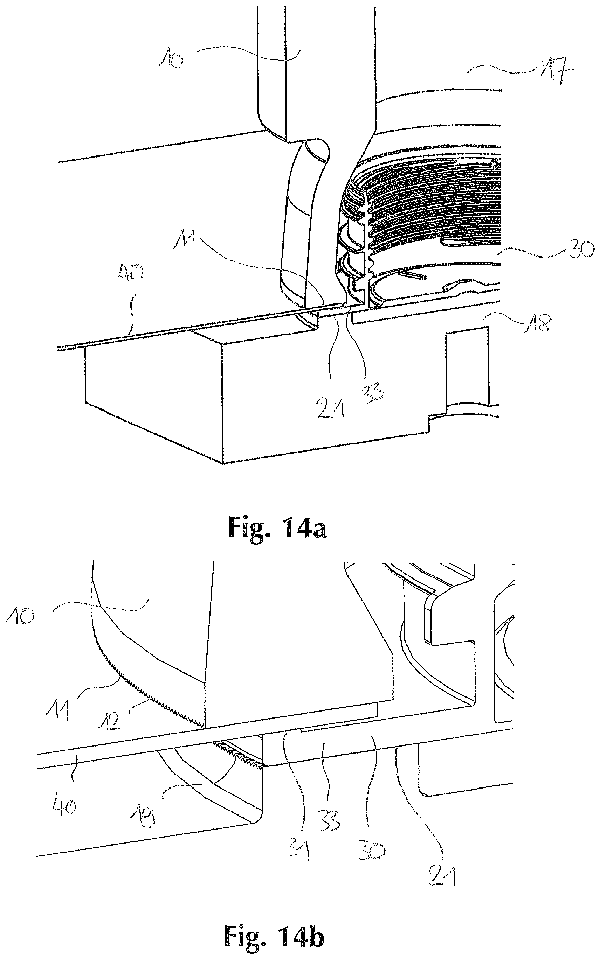

Die Figuren 14a und 14b zeigen einen perspektivischen Ausschnitt einer Verschweissung eines Packstoffs 40 mit einem Ausguss 30 in einer zweiten Ausführungsform. Ähnlich wie in den vorstehend beschriebenen Ausführungsformen wird der Ausguss 30 mit seinem Flansch 33 auf eine Aufnahme 18 gelegt. Die Aufnahme 18 weist eine Auflagefläche 21 für den Flansch 33 auf. Der Kontakt zwischen dem Ausguss 30 und dem Packstoff 40 erfolgt im Bereich eines Energierichtungsgebers 31 (siehe Figur 14b). Die Sonotrode 10 weist ähnlich wie vorstehend beschrieben eine Aussparung 17 zur Aufnahme eines Gewindeabschnitts des Ausgusses 30 auf. Wie in den vorhergehenden Ausführungsformen ist die Arbeitsfläche 11 der Sonotrode 10 mit Kontaktlinien 12 versehen (siehe Figur 14b).

Die Auflagefläche 21 der Aufnahme 18 ist mit einer Riffelung 19 versehen.

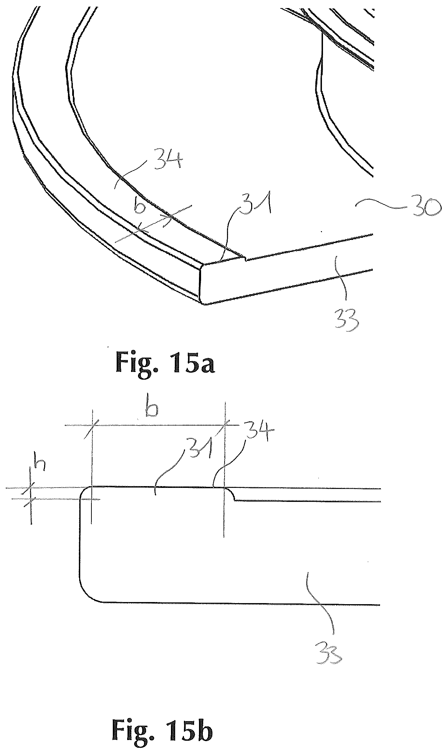

Figuren 15a und 15b zeigen vergrösserte Darstellungen des Flansches 33 des Ausgusses 30 und insbesondere des Energierichtungsgebers 31. Der Energierichtungsgeber 31 ist als kreisförmig umlaufende Kontur am Flansch 33 ausgebildet. Der Energierichtungsgeber 31 weist eine plane kreisringförmige Kontaktfläche 34 auf, auf welche der Packstoff 40 gelegt und verschweisst wird. Im Querschnitt ist der Energierichtungsgeber trapezförmig mit abgerundeten Seitenflanken ausgebildet.

Die Kontaktfläche 34 ist kreisringförmig ausgestaltet und weist in radialer Richtung eine Breite b von 1 mm auf. In einer Richtung senkrecht zur Kontaktfläche 34 weist der Energierichtungsgeber 31 eine Höhe h von 0,1 mm auf. Aufgrund der ebenen und relativ breiten Kontaktfläche 34 wird ein Eindringen des Energierichtungsgebers 31 in den Packstoff 40 (siehe Figur 14b) verhindert oder zumindest minimiert.

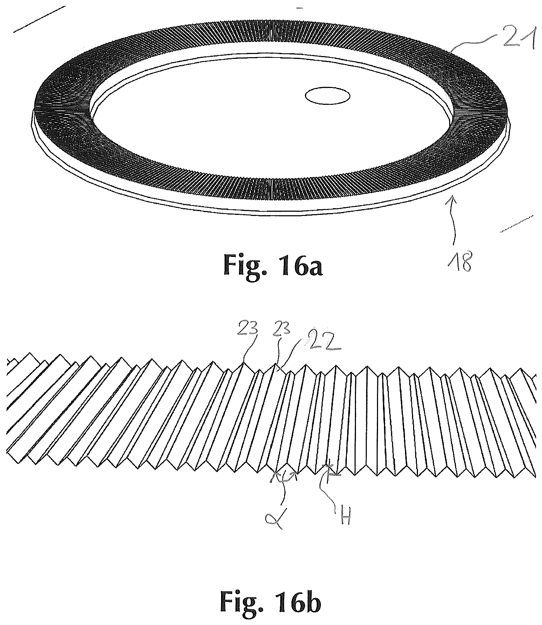

Figuren 16a und 16b zeigen eine erste Ausführungsform einer Riffelung 19 auf der Auflagefläche 21 einer Aufnahme 18. Im Ausführungsbeispiel gemäss Figuren 16a und 16b ist die Riffelung 22 ähnlich wie die Kontaktlinien 12 der Sonotrode 11 gemäss Figuren 10 und 11 ausgebildet, insbesondere mit vergleichbaren Winkeln α zwischen Schenkeln und vergleichbarer Höhe H zwischen einem Grund und der Spitze der Rippen. Im Unterschied zu der Riffelung der Sonotrode ist zwischen zwei benachbarten Rippen 23 ist im Talgrund eine weitere, kleinere Riffelung vorgesehen, um unterschiedliche Höhen aufgrund der Kreisgeometrie zu kompensieren.

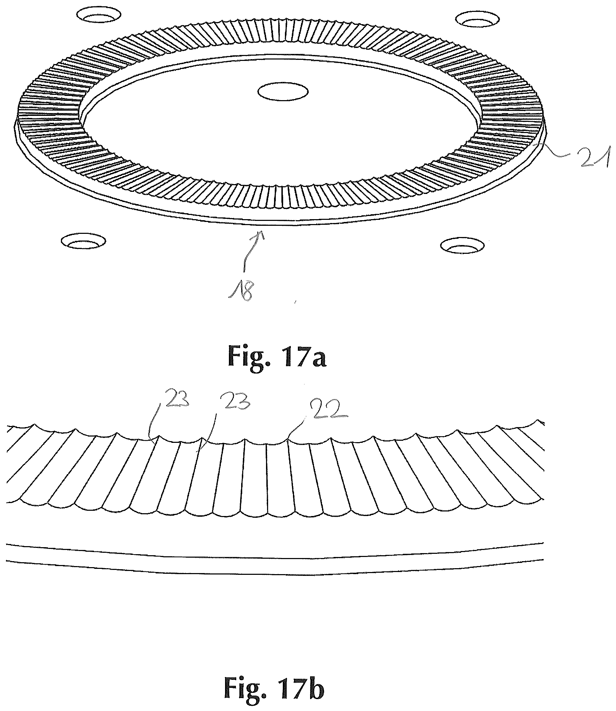

Figuren 17a und 17b zeigen eine alternative Ausführungsform einer Auflagefläche 21 einer Aufnahme 18. Die Rippen 23 sind hier mit U-förmigen Tälern miteinander verbunden. Auch hier sind zur Kompensation unterschiedlicher Höhen zwischen zwei benachbarten Rippen 23 kleinere Rippen vorgesehen. Die Winkel und Dimensionen entsprechen jeweils wie bei der Ausführungsform gemäss Fig. 16a und 16b den Winkeln und Dimensionen der dazugehörigen Sonotrode.

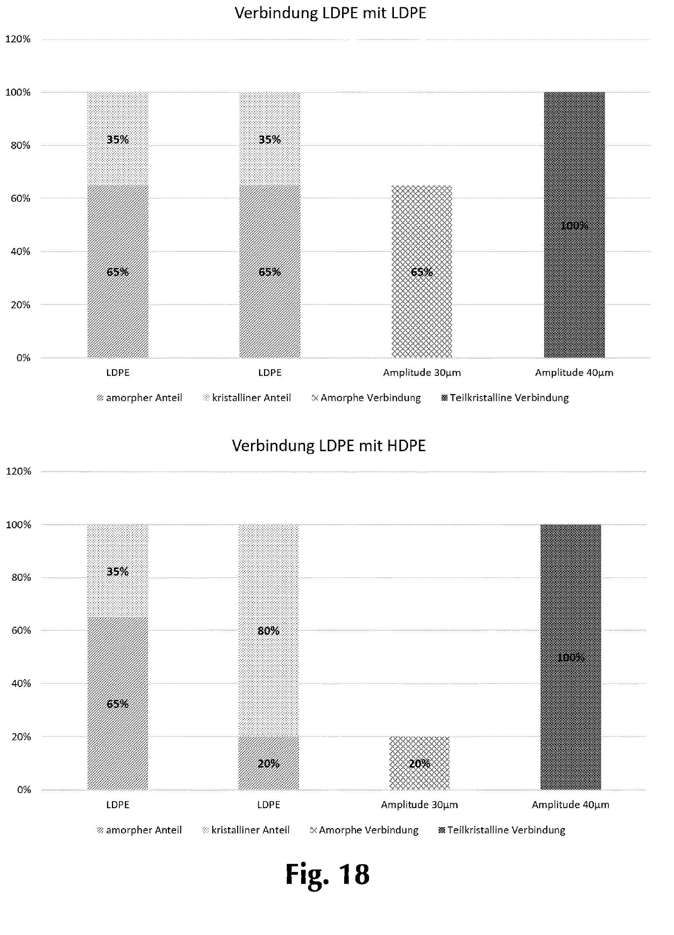

Figur 18 zeigt grafische Darstellungen von Versuchen zum Verschweissen von Fügepartnern mit unterschiedlichen Materialien.

In Figur 18 oben ist die Verbindung zwischen zwei gleichen Kunststoffteilen aus LDPE gezeigt. In Figur 18 unten ist die Verbindung von unterschiedlichen Kunststoffen, eines Teils aus LDPE und eines Teils aus HDPE, gezeigt. In den beiden linken Säulen sind jeweils die amorphen und kristallinen Anteile der Fügepartner dargestellt. Daraus ist ersichtlich, dass in der unteren Darstellung gemäss Figur 18 die amorphen und kristallinen Anteile in den beiden Fügepartner (links LDPE, rechts HDPE) unterschiedlich sind.

Mit einer longitudinal aufbringbaren Amplitude von 30 µm lässt sich aufgrund des relativ hohen gleichen amorphen Anteils bei einer Verbindung von LDPE mit LDPE (obere Darstellung) eine ausreichend gute Verbindung mit einem Verbindungsanteil von 65 % erzielen. Bei Erhöhung der Amplitude auf 40 µm wird eine nahezu vollständige Verbindung erzielt.

Im Unterschied dazu lässt sich mit einer Amplitude von 30 µm bei einer Verbindung von LDPE mit HDPE nur ein Verbindungsanteil von 20 % erreichen (untere Darstellung). Dies ist nicht ausreichend. Durch Erhöhung der Amplitude auf 40 µm lässt sich aber auch hier ein Verbindungsanteil von nahezu 100 % erreichen. Eine solche Amplitude lässt sich insbesondere mit der vorstehend beschriebenen torsionalen Einleitung erzielen, ohne dass dadurch empfindliche Fügepartner beeinträchtigt werden.

## Patentansprüche

1. Verfahren zum Verbinden von Werkstücken (30, 40) mittels Ultraschalls, enthaltend die Schritte
- Bereitstellen eines ersten Werkstücks (30) mit wenigstens einem Energierichtungsgeber (31), insbesondere eines Ausgusses für eine Verpackung,
- Bereitstellen eines zweiten Werkstückes (40), insbesondere eines Packstoffs,
- Inkontaktbringen des ersten und des zweiten Werkstücks (30, 40), derart, dass der Energierichtungsgeber (31) in Kontakt mit einer ersten Oberfläche (41) des zweiten Werkstücks (40) gelangt,
- Einleiten von Ultraschallschwingungen in eines der Werkstücke (40) über eine Arbeitsfläche (11) einer Sonotrode (10),
**dadurch gekennzeichnet, dass** eine Sonotrode (10) verwendet wird, welche auf der Arbeitsfläche (11) eine Kontur mit Kontaktlinien (12) aufweist und dass die Sonotrode (10) bezüglich des ersten Werkstücks (30) so positioniert wird, dass die Kontaktlinien (12) quer zum Energierichtungsgeber (31) verlaufen.

2. Verfahren nach Anspruch 1, wobei die Arbeitsfläche (11) der Sonotrode (10) in Kontakt mit einer der ersten Oberfläche (41) gegenüberliegenden zweiten Oberfläche (42) des zweiten Werkstücks (40) gebracht wird.

3. Verfahren nach Anspruch 1 oder 2, wobei eine Sonotrode (10) verwendet wird, bei der die Arbeitsfläche (11) kreisförmig ist und die Kontaktlinien (12) sternförmig auf der Arbeitsfläche (11) angeordnet sind.

4. Verfahren nach Anspruch 3, wobei eine Sonotrode (10) verwendet wird, bei der die Kontaktlinien (12) auf einer Rippe (13) zwischen zwei Vertiefungen (14) ausgebildet sind.

5. Verfahren nach Anspruch 4, wobei der Querschnitt der Rippe (13) in einer Ebene senkrecht zur radialen Richtung (r) in einem Schweissbereich (15) in radialer Richtung konstant bleibt.

6. Verfahren nach Anspruch 4 oder 5, wobei die Rippe (13) im Querschnitt in einer Ebene senkrecht zur radialen Richtung V-förmig ausgebildet ist, insbesondere mit einem Winkel (α) von 40° bis 70°, insbesondere 60°, und/oder wobei der Abstand (H) zwischen den Kontaktlinien (12) und einem Grund (16) der Vertiefungen (14) 0,1 mm bis 1,5 mm, bevorzugt 0,4 mm bis 1 mm, insbesondere etwa 0,6 mm beträgt.

7. Verfahren nach einem der Ansprüche 1 bis 6, wobei die Kontaktlinien (12) einen Abstand (a) von 0,1 mm bis 2,5 mm, bevorzugt 0,8 mm bis 2 mm, insbesondere etwa 1 mm zueinander aufweisen.

8. Verfahren nach einem der Ansprüche 1 bis 7, wobei der Energierichtungsgeber (31) als umlaufende Erhöhung (31) ausgebildet ist, insbesondere als kreisförmige Erhöhung, und/oder wobei der Energierichtungsgeber (31) im Querschnitt insbesondere trapezförmig ist und eine Kontaktfläche zur Verbindung mit dem zweiten Werkstück aufweist, wobei die Kontaktfläche insbesondere eben ausgebildet ist und eine Breite und der Energierichtungsgeber (31) eine Höhe senkrecht zur Kontaktfläche aufweist und die Breite der Kontaktfläche mindestens 5-mal, bevorzugt mindestens 7-mal, insbesondere etwa 10-mal der Höhe des Energierichtungsgebers (31) entspricht.

9. Verfahren nach einem der Ansprüche 1 bis 8, wobei die Kontaktlinien (12) unter einem Winkel (β) von 90° zum Energierichtungsgeber (31) verlaufen.

10. Verfahren nach einem der Ansprüche 1 bis 9, wobei die Ultraschallschwingungen als torsionale Schwingungen, als longitudinale Schwingungen oder als Kombination von torsionalen und longitudinalen Schwingungen eingeleitet werden.

11. Verfahren nach einem der Ansprüche 1 bis 10, wobei als erstes und als zweites Werkstück (30, 40) Werkstücke mit unterschiedlichem Material bereitgestellt werden, wobei insbesondere das erste Werkstück (30) zumindest im Bereich des Energierichtungsgebers (31) aus HDPE besteht und das zweite Werkstück (40) zumindest auf der ersten Oberfläche (41) LDPE aufweist.

12. Zusammengesetzter Gegenstand (20), insbesondere Verpackung, mit einem ersten und einem zweiten Werkstück (30, 40), insbesondere hergestellt mit einem Verfahren nach einem der Ansprüche 1 bis 11,
wobei das erste und das zweite Werkstück (30, 40) mittels Ultraschallschweissung miteinander verbunden sind und wobei das erste Werkstück (30) auf einer dem zweiten Werkstück (40) zugewandten Seite (32) einen Energierichtungsgeber (31) aufweist,
**dadurch gekennzeichnet, dass** der Gegenstand (10) auf dem zweiten Werkstück (40) in einem Bereich entlang des Energierichtungsgebers (31) Schalleinleitungseindrücke (45) aufweist, welche voneinander beabstandet und durch Schweisszonen (44) voneinander getrennt sind und welche quer zum Energierichtungsgeber (31) verlaufen.

13. Zusammengesetzter Gegenstand (20) in Form einer Verpackung, mit einem ersten und einem zweiten Werkstück (30, 40), insbesondere nach Anspruch 12,
wobei das erste und das zweite Werkstück (30, 40) mittels Ultraschallschweissung miteinander verbunden sind und wobei das erste Werkstück (30) auf einer dem zweiten Werkstück (40) zugewandten Seite (32) einen Energierichtungsgeber (31) aufweist, der im Querschnitt eine Kontaktfläche zur Verbindung mit dem zweiten Werkstück aufweist, wobei die Kontaktfläche insbesondere eben ausgebildet ist und eine Breite und der Energierichtungsgeber (31) eine Höhe senkrecht zur Kontaktfläche aufweist, **dadurch gekennzeichnet dass** die Breite der Kontaktfläche mindestens 5-mal, bevorzugt mindestens 7-mal, insbesondere etwa 10-mal der Höhe des Energierichtungsgebers (31) entspricht, wobei das erste Werkstück ein Ausguss (30) und das zweite Werkstück ein Packmaterial (40) ist.

14. Gegenstand (20) nach einem der Ansprüche 12 und 13, wobei das erste Werkstück (30) ein erstes Kunststoffmaterial aufweist und insbesondere daraus besteht, insbesondere HDPE, und wobei das zweite Werkstück (40) auf seiner dem ersten Werkstück (30) zugewandten Seite (41) ein zweites Kunststoffmaterial aufweist, das vom ersten Kunststoffmaterial verschieden ist, insbesondere LDPE.

15. Gegenstand nach einem der Ansprüche 12 bis 14, wobei das zweite Werkstück (40) ein Laminat ist und sich die Schalleinleitungseindrücke (45) im Wesentlichen durch eine oberste Schicht (46) des Laminats hindurch erstrecken.

16. Ausguss für eine Verpackung, insbesondere für eine Verpackung nach einem der Ansprüche 12 bis 15,
wobei das Werkstück (30) auf einer dem zweiten Werkstück (40) zuwendbaren Seite (32) einen Energierichtungsgeber (31) aufweist, der im Querschnitt eine Kontaktfläche zur Verbindung mit dem zweiten Werkstück aufweist, wobei die Kontaktfläche insbesondere eben ausgebildet ist und eine Breite und der Energierichtungsgeber (31) eine Höhe senkrecht zur Kontaktfläche aufweist, **dadurch gekennzeichnet dass** die Breite der Kontaktfläche mindestens 5-mal, bevorzugt mindestens 7-mal, insbesondere etwa 10-mal der Höhe des Energierichtungsgebers (31) entspricht.

## Claims

1. Method for joining workpieces (30, 40) by means of ultrasound, comprising the steps of
- providing a first workpiece (30) with at least one energy direction generator (31), preferably a spout for packaging,
- providing a second workpiece (40), preferaply a packaging,
- bringing the first and the second workpiece (30, 40) into contact in such a way that the energy direction generator (31) comes into contact with a first surface (41) of the second workpiece (40),
- introducing ultrasonic vibrations into one of the workpieces (40) via a working surface (11) of a sonotrode (10),
**characterized in that** a sonotrode (10) is used which has a contour with contact lines (12) on the working surface (11), and
**in that** the sonotrode (10) is positioned with respect to the first workpiece (30) in such a way that the contact lines (12) run transversely to the energy direction generator (31).

2. Method according to claim 1, wherein the working surface (11) of the sonotrode (10) is brought into contact with a second surface (42) of the second workpiece (40) opposite the first surface (41).

3. Method according to claim 1 or 2, wherein a sonotrode (10) is used in which the working surface (11) is circular and the contact lines (12) are arranged in a star shape on the working surface (11).

4. Method according to claim 3, wherein a sonotrode (10) is used in which the contact lines (12) are formed on a rib (13) between two adjacent recesses (14).

5. Method according to claim 4, wherein the cross-section of the rib (13) in a plane perpendicular to the radial direction (r) of a welding area (15) remains constant in the radial direction.

6. Method according to claim 4 or 5, wherein the rib (13) is V-shaped in cross-section in a plane perpendicular to the radial direction, in particular with an angle (α) of 40° to 70°, preferably 60°, and/or wherein the distance (H) between the contact lines (12) and a base (16) of the recesses (14) is from 0.1 mm to 1.5 mm, preferably from 0.4 mm to 1 mm, particularly preferably about 0.6 mm.

7. Method according to any one of claims 1 to 6, wherein the contact lines (12) have a distance (a) of 0.1 mm to 2.5 mm from one another, preferably of 0.8 mm to 2 mm, particularly preferably about 1 mm.

8. Method according to any one of claims 1 to 7, wherein the energy direction generator (31) is designed as a circular elevation (31), and/or wherein the energy direction generator (31) is trapezoidal in cross-section and has a contact surface for connection to the second workpiece, the contact surface being designed to be flat and having a width and the energy direction generator (31) having a height perpendicular to the contact surface, and the width of the contact surface corresponding at least 5 times the height of the energy direction generator (31), preferably 7 times, in particular preferably 10 times.

9. Method according to any one of claims 1 to 8, wherein the contact lines (12) run at an angle (β) of 90° to the energy direction generator (31).

10. Method according to any one of claims 1 to 9, wherein the ultrasonic vibrations are introduced as torsional vibrations, as longitudinal vibrations or as a combination of torsional and longitudinal vibrations.

11. Method according to any one of claims 1 to 10, wherein workpieces of different material are provided as first and second workpieces (30, 40), wherein the first workpiece (30) consists of HDPE at least in the region of the energy direction transmitter (31) and the second workpiece (40) has LDPE at least on the first surface (41).

12. Composite article (20), having a first and a second workpiece (30, 40), produced by a method according to any one of claims 1 to 11,
wherein the first and second workpieces (30, 40) are joined to one another by means of ultrasonic welding, and wherein the first workpiece (30) has an energy direction generator (31) on a side (32) that faces the second workpiece (40),
**characterized in that** the article (10) has, on the second workpiece (40), in a region along the energy direction generator (31), acoustic introduction impressions (45) which are spaced apart from each other and separated from each other by welding zones (44) and which extend transversely to the energy direction generator (31).

13. Composite article (20), in form of a packaging, comprising a first and a second workpiece (30, 40), preferably according to claim 12,
wherein the first and the second workpiece (30, 40) are connected to each other by means of ultrasonic welding and wherein the first workpiece (30) has, on a side (32) facing the second workpiece (40), an energy direction generator (31) which has, in cross-section, a contact surface for connection to the second workpiece, wherein the contact surface is in particular flat and has a width and the energy direction generator (31) has a height perpendicular to the contact surface, **characterized in that** the width of the contact surface is at least 5 times the height of the energy direction generator (31), preferably 7 times, particular preferably 10 times, wherein the first workpiece is a spout (30) and the second workpiece is a packing material (40).

14. Composite article (20) according to one of claims 12 or 13, wherein the first workpiece (30) has a first plastic material, preferably HDPE, and wherein the second workpiece (40) has, on its side (41) facing the first workpiece (30), a second plastic material, preferably LDPE, which is different from the first plastic material.

15. Composite article according to one of claims 12 or 14, wherein the second workpiece (40) is a laminate and the sound introduction impressions (45) extend substantially through an uppermost layer (46) of the laminate.

16. Spout for a packaging, preferably for a packaging according to any one of claims 12 to 15, wherein the first workpiece (30) has, on a side (32) facing the second workpiece (40), an energy direction sensor (31) which has, in cross-section, a contact surface for connection to the second workpiece, wherein the contact surface is in particular flat and has a width and the energy direction generator (31) has a height perpendicular to the contact surface, **characterized in that** the width of the contact surface is at least 5 times the height of the energy direction generator (31), preferably 7 times, particular preferably 10 times.

## Revendications

1. Procédé d'assemblage de pièces (30, 40) au moyen d'ultrasons, comprenant les étapes suivantes
- fournir une première pièce (30) avec au moins un directeur d'énergie (31), de préférence un bec pour l'emballage,
- fournir une deuxième pièce (40), de préférence un emballage,
- mettre en contact la première et la deuxième pièce (30, 40) de manière à ce que le directeur d'énergie (31) entre en contact avec une première surface (41) de la deuxième pièce (40),
- introduire des vibrations ultrasoniques dans l'une des pièces (40) par l'intermédiaire d'une surface de travail (11) d'une sonotrode (10),
**caractérisé par** l'utilisation d'une sonotrode (10) qui présente un contour avec des lignes de contact (12) sur la surface de travail (11), et
en ce que la sonotrode (10) est positionnée par rapport à la première pièce (30) de manière à ce que les lignes de contact (12) soient transversales par rapport au directeur d'énergie (31).

2. Procédé selon la revendication 1, dans lequel la surface de travail (11) de la sonotrode (10) est mise en contact avec une deuxième surface (42) de la deuxième pièce (40) opposée à la première surface (41).

3. Procédé selon la revendication 1 ou 2, dans laquelle on utilise une sonotrode (10) dont la surface de travail (11) est circulaire et les lignes de contact (12) sont disposées en étoile sur la surface de travail (11).

4. Procédé selon la revendication 3, dans laquelle on utilise une sonotrode (10) dans laquelle les lignes de contact (12) sont formées sur une nervure (13) entre deux évidements adjacents (14).

5. Procédé selon la revendication 4, dans lequel la section transversale de la nervure (13) dans un plan perpendiculaire à la direction radiale (r) d'une zone de soudage (15) reste constante dans la direction radiale.

6. Procédé selon la revendication 4 ou 5, dans lequel la nervure (13) a une section transversale en forme de V dans un plan perpendiculaire à la direction radiale, en particulier avec un angle (α) de 40° à 70°, de préférence 60°, et/ou dans lequel la distance (H) entre les lignes de contact (12) et une base (16) des évidements (14) est de 0,1 mm à 1,5 mm, de préférence de 0,4 mm à 1 mm, de manière particulièrement préférée d'environ 0,6 mm.

7. Procédé selon l'une quelconque des revendications 1 à 6, dans lequel les lignes de contact (12) ont une distance (a) de 0,1 mm à 2,5 mm l'une de l'autre, de préférence de 0,8 mm à 2 mm, de préférence encore d'environ 1 mm.

8. Procédé selon l'une des revendications 1 à 7, dans lequel le directeur d'énergie (31) est conçu comme une élévation circulaire (31), et/ou dans lequel le directeur d'énergie (31) a une section transversale trapézoïdale et possède une surface de contact pour la connexion à la deuxième pièce, la surface de contact étant conçue pour être plate et ayant une largeur et le directeur d'énergie (31) ayant une hauteur perpendiculaire à la surface de contact, et la largeur de la surface de contact correspondant à au moins 5 fois la hauteur du directeur d'énergie (31), de préférence à 7 fois, en particulier de préférence à 10 fois.

9. Procédé selon l'une des revendications 1 à 8, dans lequel les lignes de contact (12) forment un angle (β) de 90° par rapport au directeur d'énergie (31).

10. Procédé selon l'une des revendications 1 à 9, dans lequel les vibrations ultrasoniques sont introduites sous forme de vibrations de torsion, de vibrations longitudinales ou d'une combinaison de vibrations de torsion et de vibrations longitudinales.

11. Procédé selon l'une des revendications 1 à 10, dans lequel des pièces de matériaux différents sont fournies en tant que première et deuxième pièces (30, 40), la première pièce (30) étant constituée de PEHD au moins dans la région du directeur d'énergie (31) et la deuxième pièce (40) étant constituée de PEBD au moins sur la première surface (41).

12. Article composite (20), comportant une première et une seconde pièce (30, 40), produit par un procédé selon l'une quelconque des revendications 1 à 11,
dans lequel la première et la deuxième pièce (30, 40) sont assemblées l'une à l'autre par soudage aux ultrasons, et dans lequel la première pièce (30) possède un directeur d'énergie (31) sur un côté (32) qui fait face à la deuxième pièce (40),
**caractérisé par le fait que** l'article (10) présente, sur la deuxième pièce (40), dans une zone située le long du directeur d'énergie (31), des empreintes d'introduction acoustique (45) qui sont espacées les unes des autres et séparées les unes des autres par des zones de soudure (44) et qui s'étendent transversalement par rapport au directeur d'énergie (31).

13. Article composite (20), sous forme d'emballage, comprenant une première et une seconde pièce (30, 40), de préférence selon la revendication 12,
dans lequel la première et la deuxième pièce (30, 40) sont reliées l'une à l'autre par soudage ultrasonique et dans lequel la première pièce (30) possède, sur un côté (32) faisant face à la deuxième pièce (40), un directeur d'énergie (31) qui présente, en section transversale, une surface de contact pour la liaison avec la deuxième pièce, dans lequel la surface de contact est en particulier plate et a une largeur et le directeur d'énergie (31) a une hauteur perpendiculaire à la surface de contact, **caractérisé en ce que** la largeur de la surface de contact est au moins 5 fois la hauteur du directeur d'énergie (31), de préférence 7 fois, en particulier 10 fois, dans lequel la première pièce est un bec (30) et la deuxième pièce est un matériau d'emballage (40).

14. Article composite (20) selon l'une des revendications 12 ou 13, dans lequel la première pièce (30) a une première matière plastique, de préférence PEHD, et dans lequel la deuxième pièce (40) a, sur son côté (41) faisant face à la première pièce (30), une deuxième matière plastique, de préférence PEBD, qui est différente de la première matière plastique.

15. Article composite selon l'une des revendications 12 ou 14, dans lequel la deuxième pièce (40) est un stratifié et les empreintes d'introduction du son (45) s'étendent sensiblement à travers une couche supérieure (46) du stratifié.

16. Bec pour un emballage, de préférence pour un emballage selon l'une quelconque des revendications 12 à 15, dans lequel la première pièce (30) présente, sur un côté (32) faisant face à la deuxième pièce (40), un directeur d'énergie (31) qui présente, en section transversale, une surface de contact pour la connexion avec la deuxième pièce, dans lequel la surface de contact est en particulier plate et a une largeur et le directeur d'énergie (31) a une hauteur perpendiculaire à la surface de contact, **caractérisé en ce que** la largeur de la surface de contact est au moins 5 fois la hauteur du directeur d'énergie (31), de préférence 7 fois, de préférence encore 10 fois.
